# EUROPÄISCHE PATENTSCHRIFT

(11) **EP 1 169 593 B1**
(45) Veröffentlichungstag und Bekanntmachung des Hinweises auf die Patenterteilung: **09.07.2003**
(21) Anmeldenummer: 00916818.8
(22) Anmeldetag: 06.04.2000
(51) Int. Cl.: F16K 31/68

(54) **VORRICHTUNG ZUM UMKEHRBAREN VERSTELLEN EINES VENTILSTÖSSELS**
DEVICE FOR REVERSIBLY ADJUSTING A VALVE TAPPET
DISPOSITIF PERMETTANT DE REGLER, DE FACON REVERSIBLE, UN POUSSOIR DE SOUPAPE

(30) Priorität: 13.04.1999 DE 19916535
(43) Veröffentlichungstag der Anmeldung: 09.01.2002
(73) Patentinhaber: Danfoss A/S, 6430 Nordborg (DK)
(72) Erfinder: KRISTENSEN, Preben, DK-8600 Silkeborg (DK); NIELSEN, Kuno, DK-8600 Silkeborg (DK); AAEN, Claus, DK-8000 Aarhus C (DK); SEERUP, Jorgen, DK-8320 Marslet (DK); LARSEN, Hans, Erik, DK-8000 Aarhus C (DK); LOLK, Soren, DK-8362 Horning (DK)
(86) Internationale Anmeldenummer: DK0000167
(87) Internationale Veröffentlichungsnummer: WO00061974

(56) Entgegenhaltungen:
- DE-A- 1 600 713
- GB-A- 2 088 531
- US-A- 5 135 163

## Beschreibung

Die Erfindung bezieht sich auf eine Vorrichtung zum umkehrbaren Verstellen eines Ventilstößels mit einem Sockel und einem zwei axial gegeneinander verstellbare Teile aufweisenden thermischen Aktuator, wobei in einer ersten Betätigungsart der erste Teil und in einer zweiten Betätigungsart der zweite Teil am Sockel abgestützt ist und der jeweils andere Teil auf ein Ausgangsglied zur Stößelbetätigung wirkt.

Bei einer bekannten Vorrichtung dieser Art (DE-AS 16 00 713) muß beim Wechsel von der einen auf die andere Betätigungsart ein Betätigungsstift und ein Brückenelement ausgewechselt sowie eine Federanordnung geändert werden. Man kann daher zwar die Verstellvorrichtung wahlweise für ein normalerweise offenes Ventil (NO) oder ein normalerweise geschlossenes Ventil (NC) verwenden, muß aber hierbei Teile ein- und ausbauen. Dies ist nicht nur mühsam, sondern begründet auch die Gefahr, daß Teile verloren gehen.

Der Erfindung liegt die Aufgabe zugrunde, eine Vorrichtung der eingangs beschriebenen Art anzugeben, die einen wesentlich einfacheren Wechsel von der einen zur anderen Betätigungsart ermöglicht.

Diese Aufgabe wird erfindungsgemäß gelöst durch eine Umschaltvorrichtung mit inneren und äußeren Kupplungselementen, die relativ zueinander um die Achse des Aktuators zumindest über einen begrenzten Winkel drehbar sind und in einer Winkelstellung die für die erste Betätigungsart erforderlichen Verbindungen und in einer anderen Winkelstellung die für die zweite Betätigungsart erforderlichen Verbindungen herstellt.

Bei dieser Konstruktion wird eine Umschaltvorrichtung benutzt, um von der einen zur anderen Betätigungsart zu wechseln. Die Umschaltung erfolgt durch eine relative Winkelverstellung zwischen inneren und äußeren Kupplungselementen, also einer sehr einfachen Verstellmöglichkeit. Es brauchen keine Teile ausgebaut und ausgetauscht zu werden, so daß auch keine Teile verlorengehen können. Da die Winkelverstellung um die Achse des Aktuators erfolgt, lassen sich die inneren und äußeren Kupplungselemente leicht unterbringen und sicher lagern.

Günstig ist es, daß die inneren Kupplungselemente in der einen Winkelstellung axial frei verschiebbar sind, und radiale Vorsprünge aufweisen, die in der anderen Winkelstellung mit Anschlägen der äußeren Kupplungselemente zusammenwirken. In der einen Winkelstellung können daher die inneren Kupplungselemente den Aktuator direkt mit dem Ausgangsglied verbinden, während in der anderen Winkelstellung durch das Zusammenwirken der inneren Kupplungselemente mit Anschlägen der äußeren Kupplungselemente eine Bewegungsumkehr herbeigeführt wird.

Bei einer bevorzugten Ausführungsform ist dafür gesorgt, daß die inneren Kupplungselemente eine das Ausgangsglied bildende Unterspindel und eine mit ihr drehfest und mit dem einen Teil des Aktuators kraftschlüssig verbundene Oberspindel aufweisen, daß die äußeren Kupplungselemente den Sockel und einen Träger, der den anderen Teil des Aktuators trägt und in Richtung auf den Sockel gedrückt wird, aufweisen, daß in der einen Winkelstellung die inneren Kupplungselemente außer Eingriff mit den äußeren Kupplungselementen stehen und daß in der anderen Winkelstellung die Oberspindel sich an einem Anschlag des Sockels abstützt und die Unterspindel einen Anschlag am Träger untergreift. Die angestrebten Ziele lassen sich mit relativ kleinen Bauelementen erreichen. Es wird daher wenig Platz zwischen dem thermischen Aktuator und dem Ventilstößel benötigt.

Besonders empfehlenswert ist es hierbei, daß bei am Sockel gehaltenen Träger dessen Anschlag um einen-Stellweg axial gegenüber dem Anschlag am Sockel versetzt ist und daß zwischen Oberspindel und Unterspindel eine Hilfsfeder angeordnet ist. Diese Hilfsfeder schiebt Oberspindel und Unterspindel axial auseinander, wenn diese nicht von außen gegeneinander gedrückt werden, so daß diese ohne Schwierigkeiten mit den axial versetzten Anschlägen in Eingriff kommen können.

Vorzugsweise sind die inneren und äußeren Kupplungselemente um 180° oder 120° drehsymmetrisch ausgebildet. Dies ergibt eine kippfreie Abstützung der einzelnen Teile aneinander.

Es empfiehlt sich, daß die inneren Kupplungselemente mit einem Radialarm versehen sind, der durch einen Schlitz in einer Abdeckhaube nach außen ragt. Man kann daher die Umschaltung von außen her vornehmen und darüber hinaus die Stellung des Ventils erkennen.

Eine ebenfalls empfehlenswerte Verstellmöglichkeit besteht darin, daß das Ausgangsglied Teil der inneren Kupplungselemente ist und an seiner Stirnseite eine die Drehverstellung erleichternde Profilierung aufweist. Diese Profilierung kann beispielsweise ein Schlitz zum Ansetzen eines Schraubendrehers sein.

Von Vorteil ist es ferner, daß die inneren Kupplungselemente einen Fortsatz tragen, der eine stirnseitige Öffnung einer Abdeckhaube durchsetzt und eine Markierung trägt. Man kann daher an der Stirnseite der Abdeckhaube erkennen, welche Winkelstellung die Umschaltvorrichtung hat.

Von Interesse ist es, daß Oberspindel und Unterspindel über zwei parallele Stifte drehfest miteinander verbunden sind. Dies erlaubt eine relative Axialverschiebung zwischen Oberspindel und Unterspindel.

Bei einer anderen bevorzugten Alternative sind Oberspindel und Unterspindel über einen zentrisch angeordneten Mehrkant drehfest miteinander verbunden.

Die Erfindung wird nachstehend anhand in der Zeichnung dargestellter bevorzugter Ausführungsbeispiele näher beschrieben. Hierin zeigen:
- Fig. 1: in schematischer Darstellung ein Ventil mit zugehöriger Verstellvorrichtung in der Betätigungsart NO (normally open),
- Fig. 2: das Ventil der Fig. 1 mit der Verstellvorrichtung in der Betätigungsart NC (normally closed),
- Fig. 3: eine Explosionsdarstellung der für die Verstellvorrichtung wesentlichen Bauteile,
- Fig. 4: eine Abwandlung der inneren Kupplungselemente,
- Fig. 5: die Ansicht eines Betätigungsaufsatzes von unten,
- Fig. 6: eine herausgebrochene Teilansicht eines abgewandelten Betätigungsaufsatzes,
- Fig. 7: eine Explosionsdarstellung eines Betätigungsaufsatzes mit Verstellvorrichtung und
- Fig. 8: einen Schnitt durch ein Ventil mit Betätigungsaufsatz in der Betätigungsart NO.

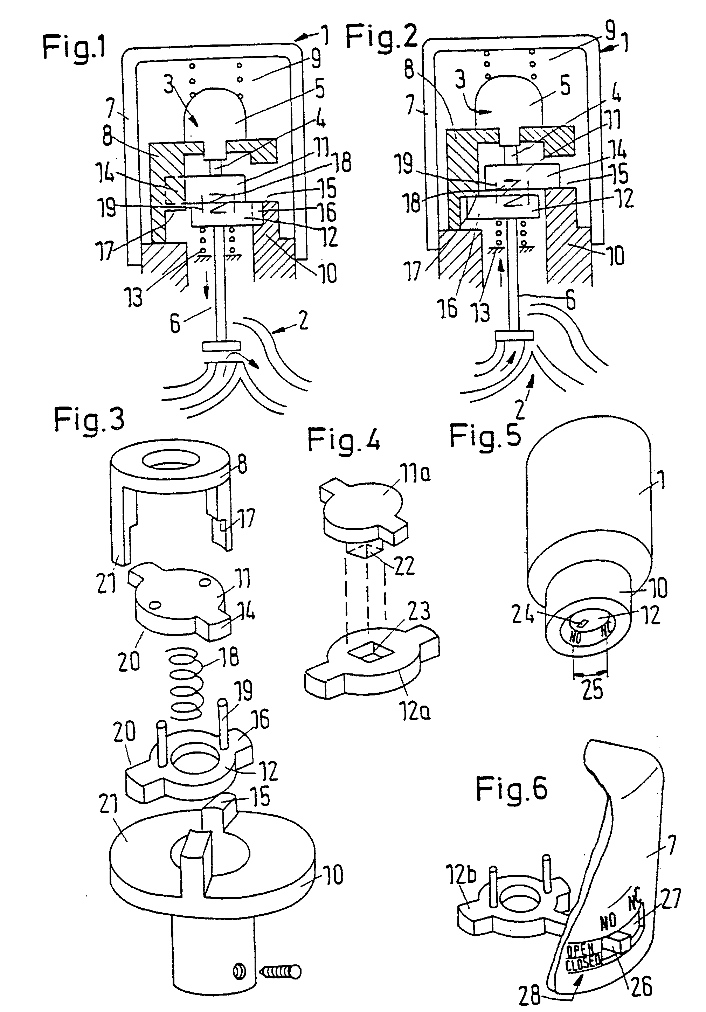

Die Fig. 1 und 2 zeigen einen Betätigungsaufsatz 1 für ein Ventil 2. Die Betätigung erfolgt durch einen thermischen Aktuator 3, beispielsweise eine elektrisch beheizte Wachspatrone. Der Aktuator 3 besteht aus einem ersten Teil 4, nämlich einem Kolben, und einem zweiten relativ dazu bewegbaren Teil 5, nämlich einem Gehäuse. Dieser Aktuator 3 wirkt über ein Ausgangsglied derart auf einen Ventilstößel 6, daß das Ventil mit steigender Erwärmung in Fig. 1 schließt (NO-Betätigungsart) und in Fig. 2 öffnet (NC-Betätigungsart).

Unter einer Abdeckhaube 7 des Betätigungsaufsatzes 1 befindet sich außer dem Aktuator 3 eine Einstellvorrichtung, mit der die Betätigungsart NO oder NC gewählt werden kann. Der zweite Teil 5 des Aktuators 3 wird von einem Träger 8 getragen, der durch eine Sicherheitsfeder 9 gegen einen Sockel 10 gedrückt wird, und ist daher indirekt am Sockel 10 abgestüzt. Zwischen dem ersten Teil 4 des Aktuators 3 und dem Ventilstößel 6 befindet sich eine Oberspindel 11, die kraftschlüssig am ersten Teil 4 anliegt, und eine Unterspindel 12, die gleichzeitig das Ausgangsglied bildet. Die Unterspindel 12 ist von einer Rückstellfeder 13 belastet. Die Oberspindel 11 besitzt einen radialen Vorsprung 14, der in Fig. 1 in einem Freiraum des Trägers 8 angeordnet und daher gestrichelt gezeichnet ist, während er in Fig. 2 an einem Anschlag 15 des Sockels 10 anliegt, so daß der erste Teil 4 des Aktuators 3 indirekt am Sockel 10 abgestüzt ist. Die Unterspindel 12 besitzt einen radialen Vorsprung 16, der in Fig. 1 in einem Freiraum des Sockels 10 angeordnet und deshalb gestrichelt gezeichnet ist, während er in Fig. 2 einen Anschlag 17 des Trägers 8 untergreift.

Die Anschläge 15 und 17 haben einen axialen Abstand voneinander, der dem Stellweg des Ventils entspricht. Oberspindel 11 und Unterspindel 12 werden durch eine Hilfsfeder 18 auseinandergedrückt und durch zwei Stifte 19 drehfest zueinander, aber axial beweglich gehalten.

In der in Fig. 1 dargestellten NO-Betätigungsart wird der zweite Teil 5 des Aktuators 3 durch die Sicherheitsfeder 9 gegen den Träger 8 und dieser gegen den Sockel 10 gedrückt, so daß eine feste Bezugslage vorgegeben ist. Bei einer Erwärmung bewegt sich der erste Teil 4 (Kolben) nach unten, drückt die Oberspindel 11 gegen die Unterspindel 12 und betätigt daher das Ventil 2 in Schließrichtung. Wenn dagegen die Variante nach Fig. 2 eingestellt ist, stützt sich der erste Teil 4 des Aktuators 3 über die Oberspindel 14 auf dem Anschlag 15 des Sockels 10 ab und wird der zweite Teil 5 (Gehäuse) nach oben verschoben. Dieser Bewegung folgt unter dem Einfluß der Rückholfeder 13 der Träger 8 und die am Anschlag 17 anliegende Unterspindel 12. Das Ventil 2 wird daher geöffnet.

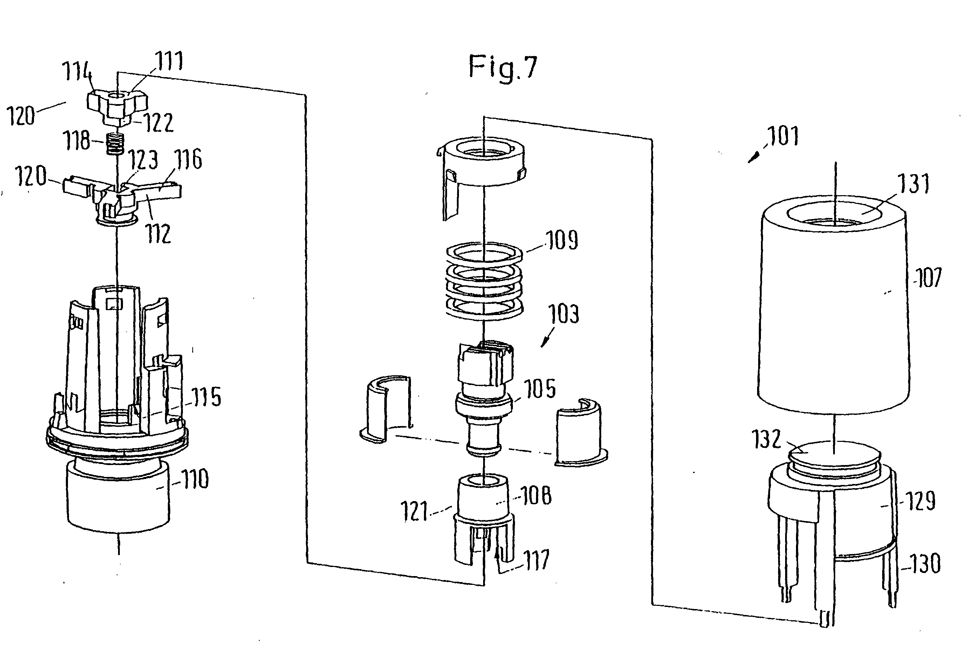

Die Fig. 1 und 2 sind Prinzipskizzen, bei denen die Vorsprünge 14 und 16 der Oberspindel 11 und der Unterspindel 12 lediglich einseitig mit den Anschlägen 15 und 17 am Sockel 10 bzw. Träger 8 zusammenwirken. In Wirklichkeit sind jedoch jeweils mehrere Vorsprünge und Anschläge vorhanden, wie Fig. 3 mit einer 180°-Drehsymmetrie oder Fig. 7 mit einer 120°-Drehsymmetrie zeigen. In jedem Fall bilden Oberspindel 11 und Unterspindel 12 innere Kupplungselemente 20 sowie Träger 8 und Sockel 10 äußere Kupplungselemente 21, die relativ zueinander um einen vorbestimmten Winkel um die Achse des Aktuators 3 drehbar sind, wobei sich in der einen Winkelstellung die Betätigungsart NO und in der anderen Winkelstellung die Betätigungsart NC ergibt.

Fig. 4 zeigt, daß die drehfeste Verbindung zwischen Oberspindel 11a und Unterspindel 12a durch einen Mehrkant 22 erfolgen kann, der in ein entsprechend profiliertes Loch 23 eingreift.

Gemäß Fig. 5 ist in der Unterseite des Ausgangsgliedes, also der Unterspindel 12 eine Profilierung 24, nämlich ein Schlitz zum Einführen eines Schraubendrehers, vorgesehen, mit dem die inneren Kupplungselemente 20 um einen Winkel 25 gegenüber den äußeren Kupplungselementen 21 verdreht werden können. Die Profilierung 24 zeigt dann jeweils auf die Markierung NO oder NC, so daß der Monteur die interne Stellung der Kupplungselemente erkennen kann.

Eine Alternative ist in Fig. 6 veranschaulicht. Dort ist die Unterspindel 12b mit einem Radialarm 26 versehen, der durch einen Schlitz 27 in der Abdeckhaube 7 hinausragt. Eine Markierung 28 kann in Umfangsrichtung anzeigen, ob die NO- oder die NC-Betätigungsart eingestellt ist, und in achsparalleler Richtung, welche Öffnungsstellung das Ventil hat.

Bei der Explosionszeichnung nach Fig. 7 werden für entsprechende Teile jeweils um 100 erhöhte Bezugszeichen verwendet. Zusätzlich zu den beschriebenen Merkmalen ist ein Fortsatz 129 vorgesehen, dessen Füße 130 mit den Vorsprüngen 116 der Unterspindel 112 verbindbar sind, so daß bei einer Winkelverstellung der inneren Kupplungselemente 120 der Fortsatz 129 mitgenommen wird. Er ragt durch eine stirnseitige Öffnung 131 der Abdeckhaube 107 und trägt eine strichförmige Markierung 132, an der man die jeweils eingestellte Betätigungsart erkennen kann. Stimmt die Markierung mit einer nichtveranschaulichten Marke an der Stirnseite der Abdeckhaube überein, ist NO-Betrieb eingestellt, ergibt sich eine Winkelversetzung der NC-Betrieb. Liegen Markierung und Marke in einer Ebene, ist das Ventil offen, sind sie axial gegeneinander versetzt, ist das Ventil weniger stark geöffnet oder geschlossen.

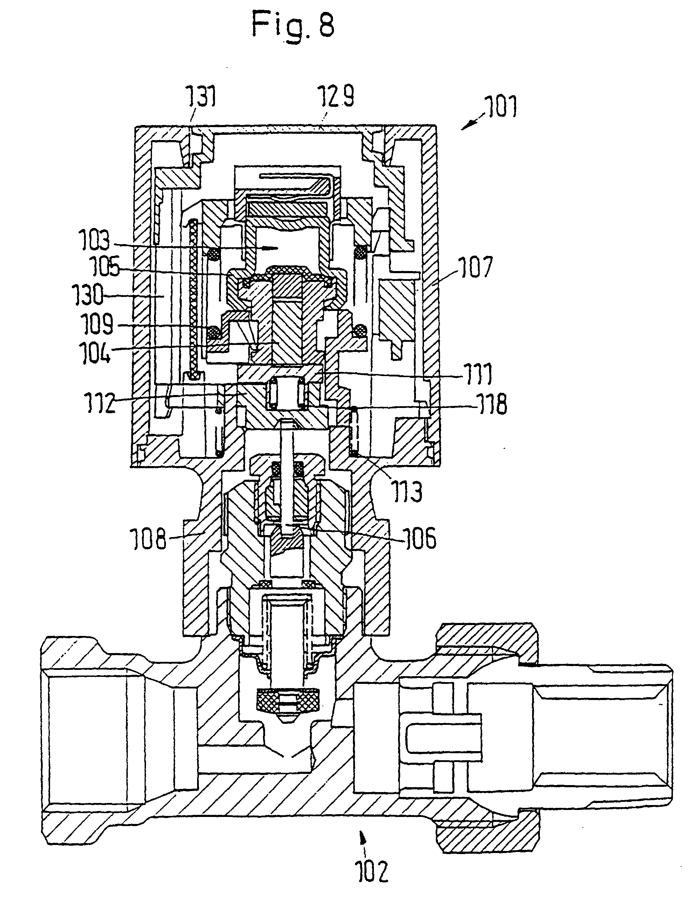

Im zusammengebauten Zustand ergibt sich dann die in Fig. 8 dargestellte Anordnung, die das unbeheizte Ventil 102 in der NO-Betätigungsart zeigt und mit Hilfe der erfindungsgemäßen Umschaltvorrichtung in die NC-Betätigungsart umgeschaltet werden kann.

## Patentansprüche

1. Vorrichtung zum umkehrbaren Verstellen eines Ventilstößels (6;106) mit einem Sockel (10;110) und einem zwei axial gegeneinander verstellbare Teile (4,5;104,105) aufweisenden thermischen Aktuator (3;103), wobei in einer ersten Betätigungsart der erste Teil (4;104) und in einer zweiten Betätigungsart der zweite Teil (5;105) am Sockel abgestützt ist und der jeweils andere Teil auf ein Ausgangsglied (12;112) zur Stößelbetätigung wirkt, **gekennzeichnet durch** eine Umschaltvorrichtung mit inneren und äußeren Kupplungselementen (20, 21; 120, 121), die relativ zueinander um die Achse des Aktuators (3; 103) zumindest über einen begrenzten Winkel drehbar sind und in einer Winkelstellung die für die erste Betätigungsart erforderlichen Verbindungen und in einer anderen Winkelstellung die für die zweite Betätigungsart erforderlichen Verbindungen herstellt.

2. Vorrichtung nach Anspruch 1, **dadurch gekennzeichnet, daß** die inneren Kupplungselemente (20; 120) in der einen Winkelstellung axial frei verschiebbar sind und radiale Vorsprünge (14, 16; 114, 116) aufweisen, die in der anderen Winkelstellung mit Anschlägen (15, 17; 115, 117) der äußeren Kupplungselemente (21; 121) zusammenwirken.

3. Vorrichtung nach Anspruch 1 oder 2, **dadurch gekennzeichnet, daß** die inneren Kupplungselemente (20; 120) eine das Ausgangsglied bildende Unterspindel (12, 112) und eine mit ihr drehfest und mit dem einen Teil (4; 104) des Aktuators (3; 103) kraftschlüssig verbundene Oberspindel (11; 111) aufweisen, daß die äußeren Kupplungselemente (21; 121) den Sockel (10; 110) und einen Träger (8; 108), der den anderen Teil (5; 105) des Aktuators (3; 103) trägt und in Richtung auf den Sockel (10; 110) gedrückt wird, aufweisen, daß in der einen Winkelstellung die inneren Kupplungselemente (20; 120) außer Eingriff mit den äußeren Kupplungselementen (21, 121) stehen und daß in der anderen Winkelstellung die Oberspindel (11; 111) sich an einem Anschlag (15; 115) des Sockels (10; 110) abstützt und die Unterspindel (117; 112) einen Anschlag (17; 117) am Träger (8; 108) untergreift.

4. Vorrichtung nach Anspruch 3, **dadurch gekennzeichnet, daß** bei am Sockel (10; 110) gehaltenen Träger (8; 108) dessen Anschlag (17, 117) um einen Stellweg axial gegenüber dem Anschlag (15; 115) am Sockel (10; 110) versetzt ist und daß zwischen Oberspindel (11; 111) und Unterspindel (12; 112) eine Hilfsfeder (18; 118) angeordnet ist.

5. Vorrichtung nach einem der Ansprüche 1 bis 4, **dadurch gekennzeichnet, daß** die inneren und äußeren Kupplungselemente (20, 21; 120, 121) um 180° oder 120° drehsymmetrisch ausgebildet sind.

6. Vorrichtung nach einem der Ansprüche 1 bis 5, **dadurch gekennzeichnet, daß** die inneren Kupplungselemente (20) mit einem Radialarm (26) versehen sind, der durch einen Schlitz (27) in einer Abdeckhaube (7) nach außen ragt.

7. Vorrichtung nach einem der Ansprüche 1 bis 5, **dadurch gekennzeichnet, daß** das Ausgangsglied Teil der inneren Kupplungselemente (20) ist und an seiner Stirnseite eine die Drehverstellung erleichternde Profilierung (24) aufweist.

8. Vorrichtung nach einem der Ansprüche 1 bis 7, **dadurch gekennzeichnet, daß** die inneren Kupplungselemente (120) einen Fortsatz (129) tragen, der eine stirnseitige Öffnung (131) einer Abdeckhaube (107) durchsetzt und eine Markierung (132) trägt.

9. Vorrichtung nach einem der Ansprüche 3 bis 8, **dadurch gekennzeichnet, daß** Oberspindel (11) und Unterspindel (12) über zwei parallele Stifte (19) drehfest miteinander verbunden sind.

10. Vorrichtung nach einem der Ansprüche 3 bis 8, **dadurch gekennzeichnet, daß** Oberspindel (11a) und Unterspindel (12a) über einen zentrisch angeordneten Mehrkant (22) drehfest miteinander verbunden sind.

## Claims

1. Device for reversible adjustment of a valve tappet (6; 106) with a socket (10; 110) and a thermal actuator (3; 103) having two parts (4, 5; 104, 105) being mutually adjustable in the axial direction, the first part (4; 104) in a first operating mode and the second part (5; 105) in a second operating mode being supported on the socket, the other part acting upon an outlet member (12; 112) for tappet activation, **characterised by** a reversing device with inner and outer coupling elements (20, 21; 120, 121), which are mutually rotatable around the axis of the actuator (3; 103), at least over a limited angle, providing in one angle position the connections required for the first operating mode, and in another angle position the connections required for the second operating mode.

2. Device according to claim 1, **characterised in that** in the one angle position, the inner coupling elements (20; 120) are free to be axially displaced and have radial projections (14, 16; 114, 116), which, in the other angle position cooperate with stops (15, 17; 115, 117) on the outer coupling elements (21; 121).

3. Device according to claim 1 or 2, **characterised in that** the inner coupling elements (20; 120) have a lower spindle (12; 112) forming the outlet member, and an upper spindle (11; 111) being unrotatably connected with the lower spindle and tensionally locked with a part (4; 104) of the actuator (3; 103); that the outer coupling elements (21; 121) carry the socket (10; 110) and a holder (8; 108), which holds the other part (5; 105) of the actuator (3; 103) and is pressed in the direction of the socket (10; 110); that in the one angle position the inner coupling elements (20; 120) are not engaging the outer coupling elements (21; 121), and that in the other angle position the upper spindle (11; 111) bears on a stop (15; 115) of the socket (10; 110) and the lower spindle (12; 112) engages under a stop (17; 117) on the holder (8; 108).

4. Device according to claim 3, **characterised in that** the stop (17; 117) of the holder (8; 108) held at the socket (10; 110) is axially offset by an adjustment travel in relation to the stop (15; 115) of the socket (10; 110) and that an auxiliary spring (18; 118) is arranged between the upper spindle (11; 111) and the lower spindle (12; 112).

5. Device according to one of the claims 1 to 4, **characterised in that** the inner and outer coupling elements (20, 21; 120, 121) are made to be rotationally symmetric by 180° or 120°.

6. Device according to one of the claims 1 to 5, **characterised in that** the inner coupling elements (20) are provided with a radial arm (26), which projects outward through a slot (27) in a covering cap (7).

7. Device according to one of the claims 1 to 5, **characterised in that** the outlet member is part of the inner coupling elements (20) and has on its front side a profiling (24) simplifying the rotary adjustment.

8. Device according to one of the claims 1 to 7, **characterised in that** the inner coupling elements (20) have an extension (129), which projects through a frontside opening (131) of a covering cap (107) and carries a marking (132).

9. Device according to one of the claims 3 to 8, **characterised in that** the upper spindle (11) and the lower spindle (12) are unrotationally connected with each other via two parallel pins (19).

10. Device according to one of the claims 3 to 8, **characterised in that** the upper spindle (11a) and the lower spindle (12a) are unrotationally connected with each other via a centrically arranged polygon (22).

## Revendications

1. Dispositif pour le déplacement réversible d'un poussoir de valve (6, 106), comprenant un socle (10, 110) et un actionneur thermique (3, 103) comportant deux pièces (4, 5, 104, 105) déplaçables axialement l'une à l'encontre de l'autre, la première pièce (4, 104) étant soutenue sur le socle dans un premier mode d'actionnement et la seconde pièce (5, 105) étant soutenue sur le socle dans un second mode d'actionnement, et l'autre pièce respective agissant sur un composant de sortie (12, 112) pour l'actionnement du poussoir, **caractérisé par** un dispositif d'inversion muni d'éléments d'accouplement intérieurs et extérieurs (20, 21, 120, 121) qui sont pivotables relativement l'un à l'autre au moins sur un angle limité autour de l'axe de l'actionneur (3, 103) et qui établissent dans une position angulaire les liaisons nécessaires au premier mode d'actionnement et dans une autre position angulaire les liaisons nécessaires au second mode d'actionnement.

2. Dispositif selon la revendication 1, **caractérisé en ce que** les éléments d'accouplement intérieurs (20, 120) sont déplaçables librement et axialement dans une des positions angulaires et comprennent des saillies radiales (14, 16, 114, 116) qui coopèrent dans l'autre position angulaire avec des butées (15, 17, 115, 117) des éléments d'accouplement extérieurs (21, 121).

3. Dispositif selon l'une ou l'autre des revendications 1 et 2, **caractérisé en ce que** les éléments d'accouplement intérieurs (20, 120) comprennent une broche inférieure (12, 112) formant le composant de sortie et une broche supérieure (11, 111), solidaire en rotation avec la broche inférieure et reliée par coopération de force avec l'une des pièces (4, 104) de l'actionneur (3, 103), **en ce que** les éléments d'accouplement extérieurs (21, 121) comprennent le socle (10, 110) et un support (8, 108) qui porte l'autre pièce (5, 105) de l'actionneur (3, 103) et qui est pressé en direction du socle (10, 110), **en ce que** dans l'une des positions angulaires, les éléments d'accouplement intérieurs (20, 120) sont dégagés des éléments d'accouplement extérieurs (21, 121) dans une des positions angulaires, et **en ce que** dans l'autre position angulaire, la broche supérieure (11, 111) s'appuie sur une butée (15, 115) du socle (10, 110) et la broche inférieure (117, 112) engage par le dessous une butée (17, 117) sur le support (8, 108).

4. Dispositif selon la revendication 3, **caractérisé en ce que**, lorsque le support (8, 108) est maintenu sur le socle (10, 110), sa butée (17, 117) est décalée axialement d'une distance de déplacement par rapport à la butée (15, 115) sur le socle (10, 110) et **en ce qu'**un ressort auxiliaire (18, 118) est agencé entre la broche supérieure (11, 111) et la broche inférieure (12, 112).

5. Dispositif selon l'une des revendications 1 à 4, **caractérisé en ce que** les éléments d'accouplement intérieurs et extérieurs (20, 21, 120, 121) sont réalisés avec symétrie de rotation de 180° ou de 120°.

6. Dispositif selon l'une des revendications 1 à 5, **caractérisé en ce que** les éléments d'accouplement intérieurs (20) sont munis d'un bras radial (26) qui dépasse vers l'extérieur à travers une fente (27) dans un capot de recouvrement (7).

7. Dispositif selon l'une des revendications 1 à 5, **caractérisé en ce que** le composant de sortie fait partie des éléments d'accouplement intérieurs (20) et présente sur sa face frontale un profilage (24) qui facilite le mouvement de rotation.

8. Dispositif selon l'une des revendications 1 à 7, **caractérisé en ce que** les éléments d'accouplement intérieurs (120) portent un prolongement (129) qui traverse une ouverture frontale (131) d'un capot de recouvrement (107) et qui porte une marque (132).

9. Dispositif selon l'une des revendications 3 à 8, **caractérisé en ce que** la broche supérieure (11) et la broche inférieure (12) sont reliées l'une à l'autre solidaires en rotation par deux goupilles parallèles (19).

10. Dispositif selon l'une des revendications 3 à 8, **caractérisé en ce que** la broche supérieure (11a) et la broche inférieure (12a) sont reliées l'une à l'autre solidaires en rotation par un relief polygonal (22) agencé au centre.
